# EUROPEAN PATENT APPLICATION

(11) **EP 4 012 587 A1**
(43) Date of publication of application: **15.06.2022**
(21) Application number: 20213919.2
(22) Date of filing: 14.12.2020
(51) Int. Cl.: G06F 21/53, G06F 21/44, H04L 29/06, G06F 9/455, H04L 29/08

(54) **SYSTEM AND METHOD FOR SECURELY TRANSMITTING OR STORING DATA**

(71) Applicant: Hensoldt Cyber GmbH, 82024 Taufkirchen (DE)
(72) Inventor: ZEH, Alexander, 80333 Munich (DE); PETER, Michael, 85521 Ottobrunn (DE); KEGREIß, Sascha, 82041 Oberhaching (DE)
(74) Representative: LifeTech IP Spies & Behrndt Patentanwälte PartG mbB

(57) **Abstract**

A system for securely transmitting or storing data comprises: a network interface controller, NIC, (no) providing an interface for exchanging data; a cryptographic hardware module (120), configured to encrypt or decrypt data provided by the network interface controller (110) based on one or more cryptographic keys; a data transmission controller (130), configured to transmit the encrypted data; and a trusted module (140) with a microkernel (141), configured to implement a trusted computing base, TCB, for enforcing a security policy. The trusted module (140) is configured to allow access to the cryptographic hardware module (120) and the cryptographic keys only via the trusted module (140) to thus encrypt or transmit the data in compliance with the security policy.

## Description

The present invention relates to a system for securely transmitting and/or storing of data and to a method for securely transmitting and/or storing of data. In particular, embodiments relate to a secured storage virtualized trust anchor.

### BACKGROUND

The security plays an increasingly important role in modern communication and involves in particular two aspects: (i) to ensure a secure data storage, and (ii) to ensure a secure data transfer. One application of particular interest relates to airborne sensor data acquisitions, wherein during a flight a sensor acquires (sensor) data and stores the acquired data in encrypted form in nonvolatile storage media. After the flight, a ground processing station retrieves the recorded data after its authenticity has been proven. In these scenarios it has to be ensured that data is not compromised at any time.

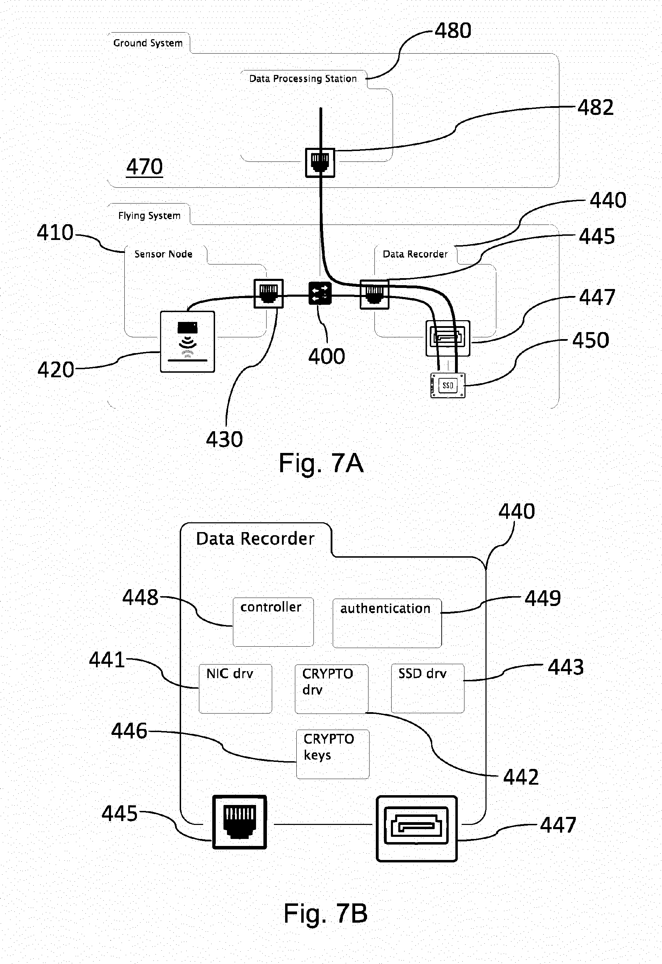

**Fig. 7A** illustrates a possible operation of a data recorder in flying systems, wherein an exemplary sensor node 410 captures sensor data using a respective sensor 420 (e.g. capturing radar or optical images). The sensor data are transferred via a network interface 430 to a data recorder 440. The data recorder 440 includes a network interface 445 and a disc interface 447 for storing the data in a storage medium 450. A processing unit 400 controls the data transfer of the sensor data to and from the data recorder 440.

After landing of the flying system, the system can be connected to a ground system 470 to transfer the recorded data via the processing unit 400 to a ground processing station 480 which likewise includes a network interface 482 for receiving the recorded data and which processes the sensor data.

**Fig. 7B** depicts further details of the data recorder 440 with the network interface 445 and the disc interface 447. The data recorder 440 includes a driver 441 for the network interface 445, a cryptographic driver 442 and a disc driver 443 for driving the disc interface 447. The cryptographic driver 442 uses cryptographic key material 446 to encrypt and/or decrypt data stored in the storage medium 450. The data recorder 440 further includes a controller 448 and an authentication unit 449 to provide an authentication of the data or the access of data (e.g. which component may access the data). The controller 448 controls the data reading and/or data writing and the encryption process in the data recorder 440.

A potential threat actor may exploit a vulnerability in different components of the data recorder 440 and depending on the privilege of the components. The attacker may also widen the scope of an attack by extending its reach to other parts of the system. If there is a weak isolation/separation of the components, the attacker may succeed in compromising the complete system. There are various attack scenarios, wherein the vulnerabilities in existing components such as data storage system can be misused to access cryptographic material, to leak sensitive data etc. Such attack scenarios can be based on malicious software, physical access, software takeover or on chosen plaintext attacks (CPA).

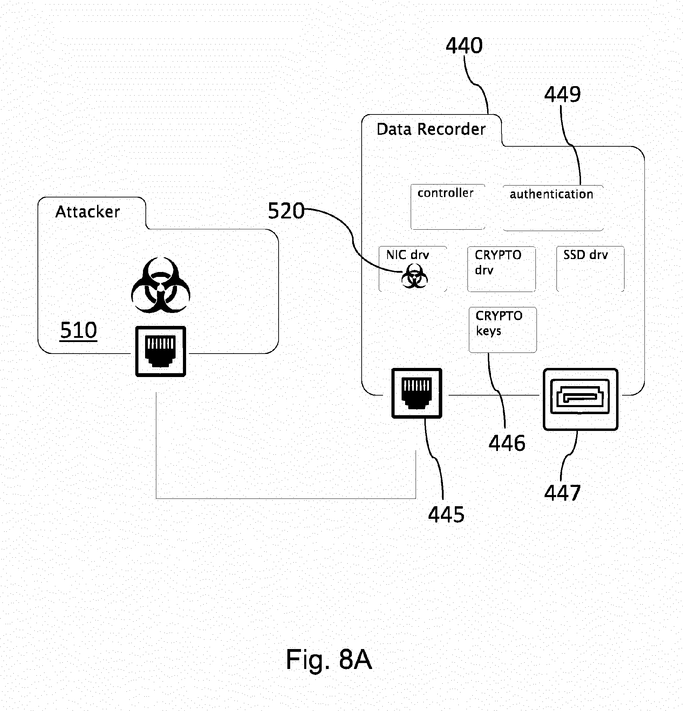

**Fig. 8A** to **Fig. 8C** illustrate the various attack scenarios.

**Fig. 8A** shows a physical access scenario, wherein the data recorder 440 as described with Fig. 7B is attacked by an attacker 510. The attacker 510 gains physical access to the operational data recorder 440 and may use the network interface 445 for the attack. The data recorder 440 may operate as expected and encrypts data before writing the data to the nonvolatile storage using the disc interface 447. In this scenario, the attacker 510 may rely on the help of a resident agent 520 to bypass the authentication 449 and to retrieve data from the data storage. If only encrypted data is revealed, the attacker 510 may target the cryptographic keys 446.

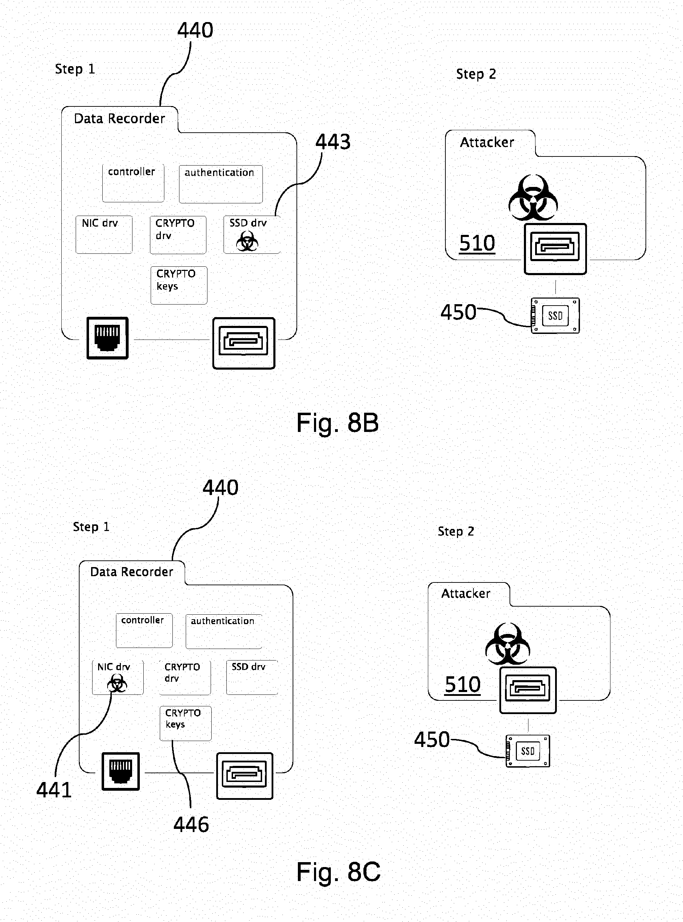

**Fig. 8B** illustrates an exemplary software takeover, wherein the attacker 510 has managed to gain control over some components of the data recorder 440, e.g. the disc driver 443 (see step 1). This may be achieved by a so-called supply chain attack. In this threat scenario data may be written unencrypted to the nonvolatile storage so that the attacker 510, when gaining physical access to the nonvolatile storage 450 (see step 2), can retrieve the (unencrypted) data.

**Fig. 8C** illustrates a threat scenario wherein the cryptographic keys 446 can be extracted by a so-called chosen plain text attack (CPA). In this scenario, the attacker 510 has managed to gain control over a software component of the data recorder 440, for example the network interface driver 441, that handles data before encryption (see step 1). Therefore, according to this threat scenario, some of this data is replaced with data that has been chosen by the attacker 510 and thus known to the attacker 510. The attacker 510 may then, when getting physical access to the nonvolatile storage 450 (see step 2), retrieve the encrypted data and, because the attacker 510 knows the replaced data, the attacker 510 is able to decipher the encrypted data - even if a proper encryption has taken place.

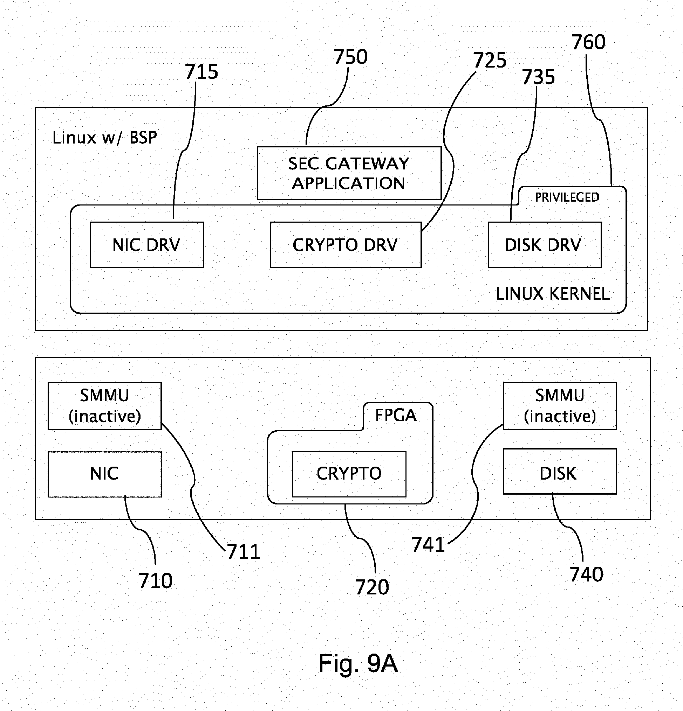

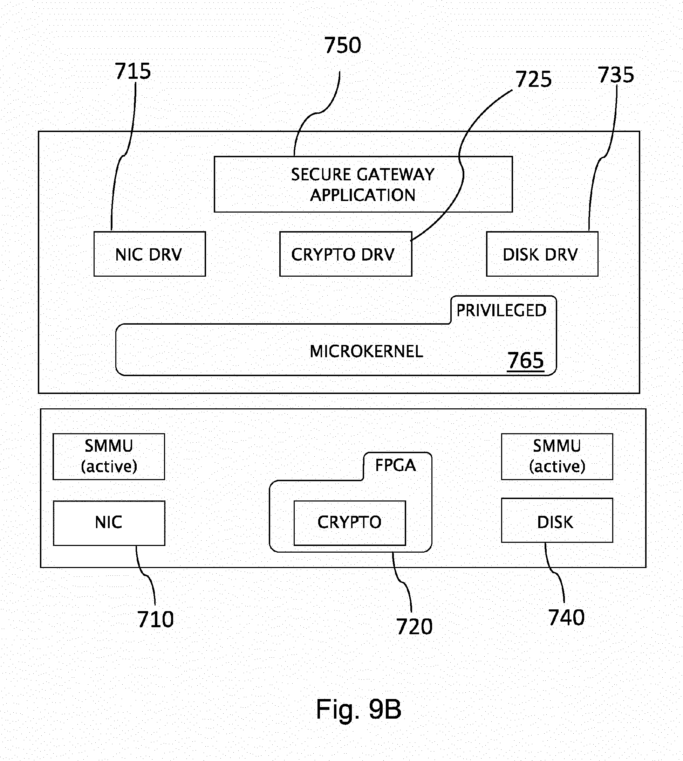

The data handling in the data recorder 440 may be implemented by a hardware/software codesign based on a field programmable gate array (FPGA). **Fig. 9A** and **Fig. 9B** depict a conventional design.

In **Fig. 9A** the hardware (lower part) includes a network interface controller (NIC) 710, where incoming data is received. This incoming, not encrypted, data will be encrypted using a cryptographic hardware module 720. The encrypted data are provided to a disc interface 740 for storing the data on an external disc 450. The hardware part further includes system memory management units 711, 741 (SMMUs) which are configured to manage the network interface controller 710 and the disc interface 740, respectively.

The software (upper part) includes as three drivers, a first driver 715 for the network interface controller 710, a second driver 725 for the cryptographic hardware module 720 and a third driver 735 for the disc interface 740. The three drivers 715, 725, 735 are integrated, for example, in a monolithic Linux kernel with a board support package (BSP). The depicted system provides a secure gateway application 750 which uses the three drivers 715, 725, 735 via an application programming interface (API) of the used Linux kernel. The system of Fig. 9A is thus based on a monolithic kernel.

**Fig. 9B** depicts another example for a conventional system. This system is not based on a monolithic Linux kernel, but on a microkernel 765. This example includes the same hardware and software components in the FPGA system shown in Fig. 9A. The only difference is the underlying microkernel-based operating system vs. Linux kernel in Fig. 9A. As consequence, the first driver 715, the second driver 725 and the third driver 735 are not part of the microkernel 765, but the microkernel 765 uses these drivers to access the different hardware components 710, 720, 740.

The Linux based system of Fig. 9A has the advantage of providing mature device driver which are already available in the Linux system. However, the Linux-based system is limited in that the drivers are running in a privileged mode, i.e. being part of the trusted computing base (TCB). The isolation/separation of the security gateway is thus limited to the degree permitted by the Linux system.

On the other hand, the microkernel-based system of Fig. 9B has its strengths in providing a small trusted computing base and a strong isolation between the components. However, the microkernel-based system is limited in that the mature Linux drivers of the BSP cannot be used and high efforts are needed to develop or redevelop drivers and the infrastructure components, which otherwise already exist in the conventional Linux board support package.

Therefore, there is a demand for alternative systems which combine the advantages of both sides using on one hand mature device drivers and, on the other side, provide a small trusted computing base with a strong isolation of the components.

### SUMMARY OF THE INVENTION

At least some of the above-mentioned problems are solved by a system for securely transmitting or storing data according to claim 1 and a method for securely transmitting or storing data according to claim 11. The dependent claims refer to specifically advantageous realizations of the subject matter of the independent claims.

The present invention relates to a system for securely transmitting and/or storing data. The system comprises: a network interface controller, NIC, configured to provide an interface for exchanging data; a cryptographic hardware module configured to encrypt or decrypt data provided by the network interface controller based on one or more cryptographic keys; a data transmission controller configured to transmit the encrypted data; and a trusted module with a microkernel configured to implement a trusted computing base, TCB, for enforcing a security policy. The trusted module is further configured to allow access to the cryptographic hardware module and the cryptographic keys only via the trusted module to thus encrypt or transmit the data in compliance with the security policy.

The TCB is here and in the following used in the sense which is well-known for someone skilled in the art, e.g. as a set of all hardware, firmware, and/or software components that are critical to the security of the whole system. Bugs or vulnerabilities occurring inside the TCB might jeopardize the security properties of the entire system. In particular, the components of the TCB are responsible for enforcing a system-wide security policy. One possibility would be to use a capability-based system that defines a hierarchic tree structure to enforce a security policy. But there may be other implementations.

Optionally, the trusted module is configured to control all data transmissions between the network interface controller and the data transmission controller and to prevent, according to the security policy, all communications bypassing the trusted module.

Optionally, the trusted module includes a cryptographic driver as part of the trusted computing base, wherein, according to the security policy, only components of the trusted module are able to access the cryptographic hardware module. The cryptographic key(s) can be loaded into the cryptographic hardware module by the cryptographic driver. Therefore, there is no need to control the driver's ability to access the cryptographic keys. However, apart from the microkernel and the hypervisor, no other component than the cryptographic driver has access to the cryptographic hardware module. As a result, the cryptographic key material is highly secured.

Optionally, the data transmission controller is: another network interface controller, NIC, or a data storage controller. The other NIC is configured to enable an encrypted data communication between the NIC and the other NIC as communication input/output devices. The data storage controller is configured to store the encrypted data or to read encrypted data to/from a storage or memory device.

Optionally the system further comprises at least one separate virtual machine based on a monolithic or a hybrid kernel providing a first driver for the network interface controller and a second driver for the data transmission controller. The system may further include a first system memory management unit, SMMU, for managing data transmissions through the NIC controlled by the first driver, and/or a second system memory management unit, SMMU, for managing data transmission to and from the data transmission controller controlled by the second driver. The trusted module is separated from the at least one separate virtual machine and is configured to control each SMMU(s) as part of the trusted computing base by controlling direct memory access, DMA, from untrusted computing components.

The monolithic/hybrid kernel(s) may be a legacy kernel, which possibly is not compliant with the desired security level. The software components can be regarded as "separated" or "isolated" if they are written, e.g., in different address spaces (e.g. in the corresponding memory).

Optionally, the trusted module includes a microkernel-based virtual machine and the system further comprises a hypervisor unit with at least one transfer agent for performing a data transfer to/from the at least one separate virtual machine and the microkernel-based virtual machine. The hypervisor may be configured to manage the microkernel-based virtual machine and the at least one separate virtual machine. The transfer agent may be a virtual Input/Output device orchestrator (VIRTIO orchestrator) or any other software implemented component that is able to perform or to manage or to control the data transfer.

The hypervisor unit may be a proper or separate hypervisor or a hypervisor submodule of the microkernel or any other hypervisor function of an available kernel. The hypervisor unit may, in particular, be part of the trusted module computing base.

Optionally, the trusted module is split into a task module and the microkernel and the system comprises further at least one virtual machine monitor. The microkernel may be further configured to provide a hypervisor. The task module may include at least one transfer agent configured to perform together with at least one virtual machine monitor the data transfer to and from the at least one separate virtual machine.

Optionally, the microkernel of the trusted module is configured to provide at least one of the following:
- to support only a small trusted computing base by separating (only) components of the trusted module from each other and from the at least one virtual machine (but no other components),
- to assign hardware recourses to non-privileged virtual machines,
- to allow communication between the separate virtual machines via tasks of the microkernel compatible with device virtualization functionality,
- to constrain data flow by suppressing unauthorized data channels or by suppressing communications based on an assumption that one peer has control over another peer,
- to limit or to reject access of device drivers in untrusted virtual machines.

The entire trusted module can thus be kept small, because only needed components are part of the TCB. In addition, the trusted module is strictly separated (by using different memory spaces and strictly controlling the direct memory access, DMA).

Optionally, the system further includes at least one virtual Input/Output device, VIRTIO, with a respective frontend subsystem (acting as guest) and a backend subsystem (acting as host). The at least one virtual machine may include the backend subsystem as a host and the trusted module may include frontend subsystem as a guest. However, the backend may also be in the trusted module and frontend may be included in the at least one virtual machine.

Optionally, the trusted module further includes at least one of the following components:
- an authenticator for authentication of data or access of data,
- a secured gateway application,
- a driver for a virtual network interface controller (VIO NIC DRV),
- a driver for a virtual disk controller (VIO DISK DRV).

The trusted computing base may serve the secure gateway application.

Embodiments relate also to a method for securely storing and/or transmitting of data. The method comprises:
- exchanging data through a network interface controller, NIC;
- encrypting, by a cryptographic hardware module, the data provided by the network interface controller based on one or more cryptographic keys;
- transmitting, by a data transmission controller, the encrypted data; and
- implementing, by a trusted module with a microkernel, a trusted computing base, TCB, for enforcing a security policy.

It is understood that in further embodiments some or all functions implemented by the systems as described before can be implemented as optional method steps in this method. The order of method steps shall only be limited or only in that one method step is needed in advance to carry out another step.

This method may also be implemented in software or a computer program product. Thus, the present invention relates also to a computer program product having a program code stored thereon, which performs the above-mentioned method, when the program code is executed on a computer or processor.

### BRIEF DESCRIPTION OF DRAWINGS

Various embodiments of the present invention will be described in the following by way of examples only, and with respect to the accompanying drawings, in which:
- Fig. 1: depicts a system for securely transmitting and/or storing data according to an embodiment of the present invention.
- Fig. 2A: depicts an embodiment for the system for securely storing data.
- Fig. 2B: depicts an embodiment for the system for securely transmitting data.
- Fig. 3: depicts a system for securely transmitting and/or storing data according to another embodiment.
- Fig. 4: illustrates the differences of between a microkernel and operating system based on a monolithic kernel.
- Figs. 5A to 5D: illustrate the strengths and limitations of a virtual input/output interface (VIRTIO) in conventional systems in comparison to embodiments.
- Fig. 6: shows a schematic flow chart for a method for securely transmitting and/or storing of data according to embodiments.
- Fig. 7A, 7B: illustrates a possible operation of a data recorder in flying systems and a conventional data recorder.
- Figs. 8A to 8C: illustrate various attack scenarios that embodiments prevent.
- Figs. 9A, 9B: illustrate the data handling in the conventional data recorder based on a field programmable gate array (FPGA).

### DETAILED DESCRIPTION

Various examples will now be described more fully with reference to the accompanying drawings in which some examples are illustrated.

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

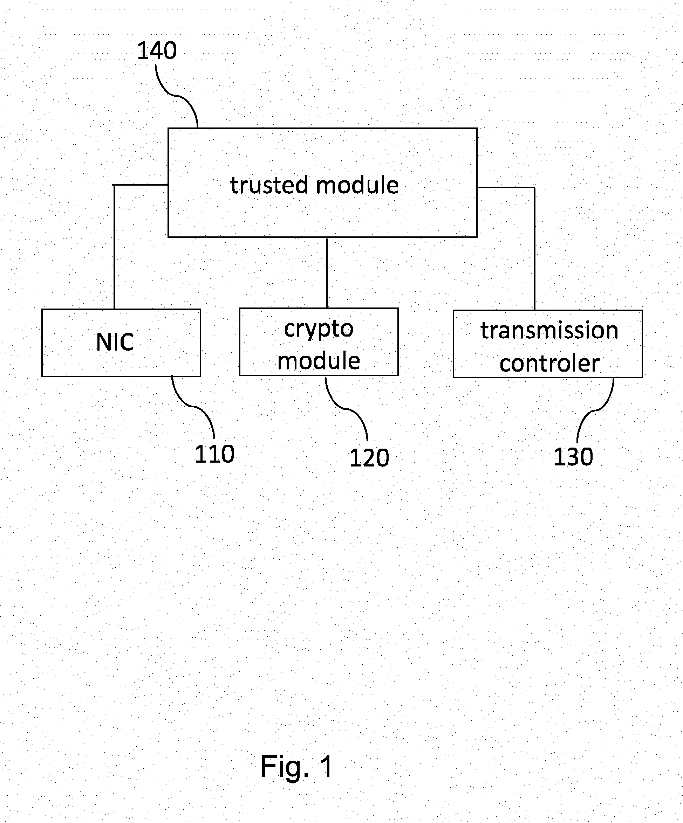

**Fig. 1** depicts a system for securely transmitting and/or storing data according to an embodiment of the present invention. The system comprises: a network interface controller (NIC) 110, a cryptographic hardware module 120, a data transmission controller 130, and a trusted module 140. The NIC 110 provides an interface for exchanging data with other external devices. The cryptographic hardware module 120 is configured to encrypt and/or decrypt data provided by the NIC 110 based on one or more cryptographic keys. The data transmission controller 130 is configured to transmit the encrypted data to another (external) device (e.g. a storage device, a communication partner, a recipient). The trusted module 140 includes a microkernel 141 and is configured to implement a trusted computing base for enforcing a security policy and to allow access to the cryptographic hardware module 120 and the cryptographic keys only via the trusted module 140. The data is encrypted or transmitted in compliance with the security policy.

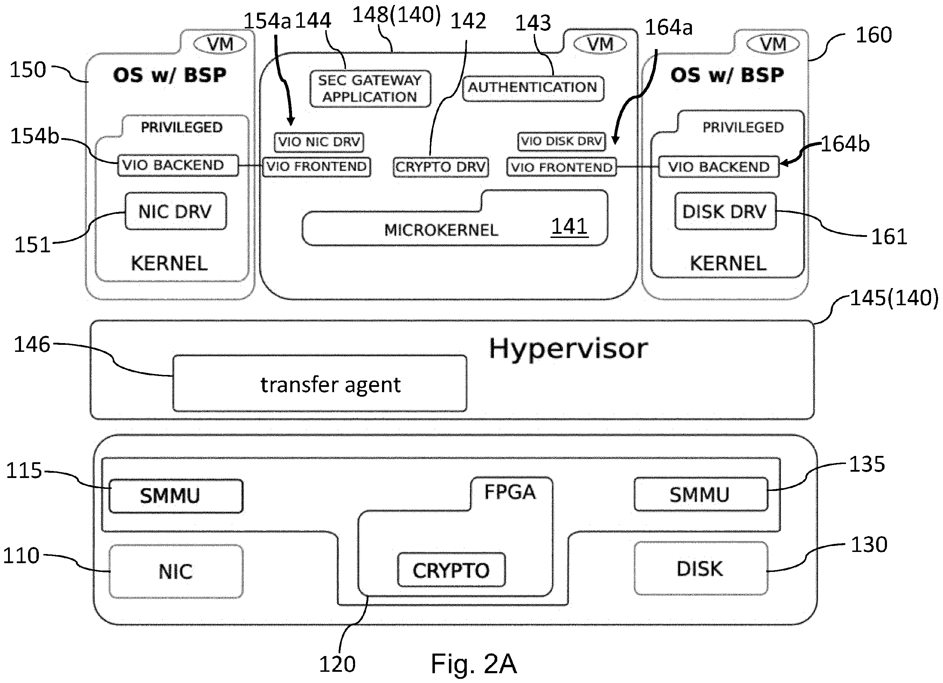

**Fig. 2A** shows an embodiment for the system depicted as a hardware and software co-design, wherein on the software side the trusted module 140 includes a task module 148 (may also be a microkernel-based virtual machine) and a hypervisor 145. The task module 148 is in this embodiment implemented as a virtual machine (VM) with a microkernel 141 as operating system (in other words, it is a microkernel-based VM 148) and is separated from the hypervisor 145 (e.g. as a separate layer). The microkernel 141 does not need to have hypervisor function in the embodiment. The hardware side (below the hypervisor 145) includes the NIC 110, the cryptographic hardware module 120 (e.g. implemented as an FPGA), the data transmission controller 130, a first system memory management unit, SMMU, 115 for managing data transmissions through the NIC 110, and a second system memory management unit, SMMU, 135 for managing data transmission to and from the data transmission controller 130. According to this embodiment the data transmission controller 130 is a disk controller (DISC) for a storage medium (as e.g. the disc interface 447 for the conventional system in Fig 7A, 7B). The storage medium may be a solid-state disc (SSD) or any other non-volatile storage or memory device.

The system further comprises a first virtual machine 150 and second virtual machine 160, which are based on an operating system with a legacy kernel (e.g. monolithic or hybrid). The operating system (e.g. Linux) of the first virtual machine 150 may provide as part of its kernel a first driver 151 (NIC driver) for the network interface controller 110. The operating system (e.g. Linux) of the second virtual machine 160 may provide as part of its kernel a second driver 161 (DISK driver) for the exemplary disc controller 130.

The operating systems of the virtual machines 150, 160 may not be compliant with a desired security level. The security level will be ensured by the trusted module 140 which is separated or isolated from the virtual machines 150, 160 and is configured to control each SMMU 115, 135 and the cryptographic hardware module 120 as part of the trusted computing base by controlling direct memory access, DMA, from untrusted computing components. As part of the desired separation or isolation of the software components, different memory spaces or memory region are used, which are specifically designated for the separated software components. In addition, the separation may further be achieved by an access control (e.g. controlling DMA).

The task module 148 may include several components which may include one or more of the following: an authenticator 143 for authentication of data or access of data, a secured gateway application 144, a driver 142 for the cryptographic hardware module 120, and drivers of for input/output (I/O) devices which will now be described in more detail.

The system further comprises virtualized I/O devices 154, 164 that control the data transfer between the task module 148 and the first (or second) virtual machine 150 (or 160). As it will be set out in more detail below, the input/output devices 154, 164 are split in that the frontend subsystem 154a, 164a is part of the task module 148 and the backend subsystem 154b, 164b is part of the virtual machines 150, 160. The respective drivers (VIO DISK DRV / VIO NIC DRV) for the I/O devices 154, 164 are part of the task module 148. These I/O devices are virtualized based in part on the virtual I/O device (VIRTIO) specification as described in https://docs.oasis-open.org/virtio/virtio/v1.1/csprdo1/virtio-v1.1-csprdo1.html (OASIS standard).

The hypervisor 145 is configured to manage the various virtual machines 150, 160 (based monolithic kernel) and/or the microkernel-based VM 148 (task module). The hypervisor unit 145 includes at least one transfer agent 146 for handling the transfer of data from the guest system (VMs 150, 160 and virtualized task module 148) to a processing area. A transfer may only be executed by the transfer agent 146 if it is approved by the trusted module 140. This is not guaranteed in conventional VIO systems, where the host can read/write arbitrary host memory segments without needing the approval of the guest. The processing area is a memory region used by a host VIRTIO subsystem to fulfill its function. For example, data are transferred from a guest subsystem into this region and processed (e.g. written/read on/from a physical device). If needed, data are transferred from this region back to the guest subsystem (e.g. as consequence of a guest VIRTIO read operation).

According to the embodiment of Fig. 2A, the TCB includes the trusted module 140 (the virtualized task module 148 and the hypervisor 145), the cryptographic hardware module 120 and the SMMUs 115, 135. The TCB is used in the sense which is well-known for someone skilled in the art and be regarded as a set of all hardware, firmware, and/or software components that are critical to its security. Bugs or vulnerabilities occurring inside the TCB might jeopardize the security properties of the entire system.

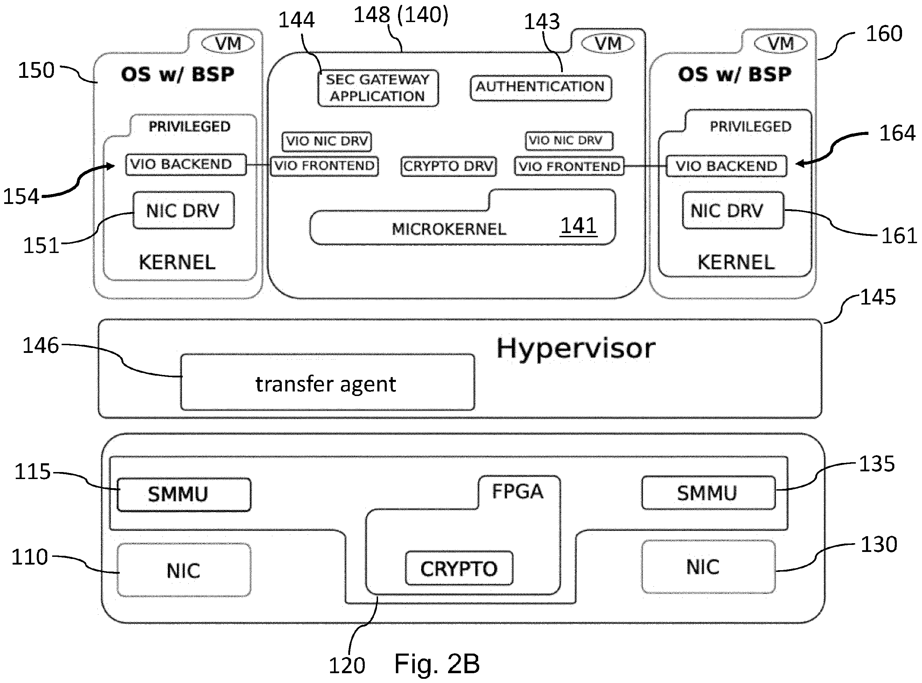

**Fig. 2B** depicts an embodiment which differs from the embodiment of Fig. 2A only in that the data transmission controller 130 is now another network interface controller, NIC, instead of a data storage controller DISK of Fig. 2A, which was configured to store the encrypted data and/or to read encrypted data to/from a storage device. The NIC controller 130 may be configured to enable an encrypted data communication between the NIC 110 (e.g. as communication input device) and the other NIC 130 (e.g. as communication output device). Accordingly, the second (disc) driver 161 of the embodiment of the Fig. 2A is replaced by a second (NIC) driver 161 provided by the second virtual machine 160.

All other components and their functions are the same as in the embodiment of Fig. 2A. There is no need to repeat the description of these components.

In these two embodiments of Fig. 2A, 2B the drivers 151, 161 for NIC 110 and DISK/NIC 130 can "stay" in the existing exemplary Linux environments with their BSP (i.e. in VMs 150, 160). Only the "VIO Backend" of the I/O drives 154b, 164b are added. The security application resides in the newly inserted security virtual machine 148, which includes the cryptographic driver 142 and virtual l/O drivers and their frontends 154a, 164a. This provides the major advantage of using mature device drivers in combination with a small trusted computing base with a strong isolation/separation of the components.

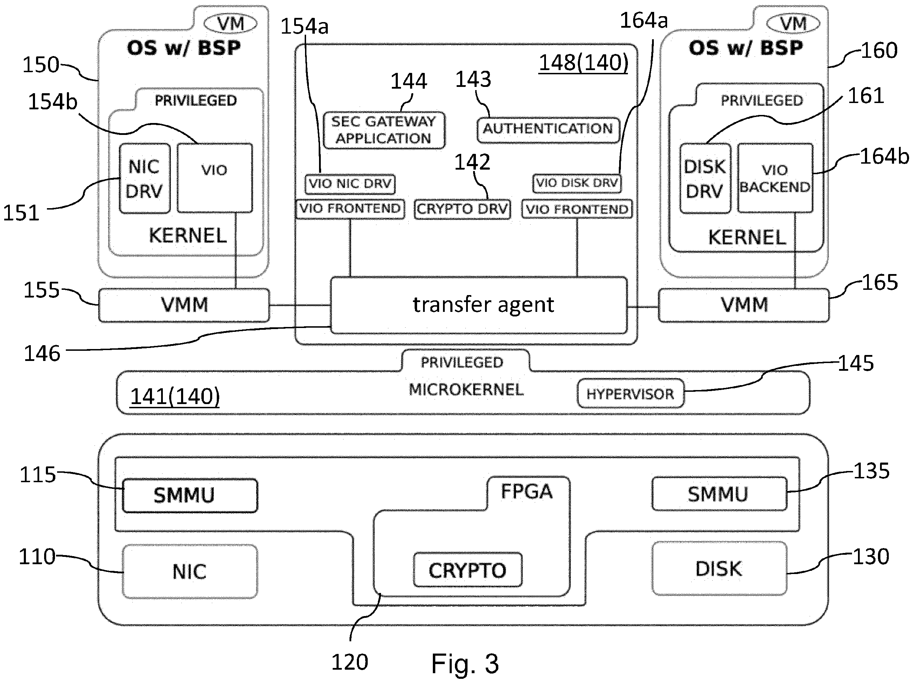

**Fig. 3** depicts a system for securely transmitting and/or storing data according to another embodiment. The FPGA hardware architecture (components 110, 115, 120, 130, 135) may be the same as in the embodiments of Fig. 2A and Fig. 2B. One difference to the previous embodiments is the microkernel 141 which is now not part of a virtual machine, but is now a separate, not virtualized component. According to this embodiment the microkernel 141 can serve as hypervisor 145, which is included of the microkernel 141.

According to this embodiment, a first virtual machine monitor 155 (VMM) and a second VMM 165 are provided to the first virtual machine 150 and the second virtual machine 160, respectively. All other components are basicaly identical to the embodiment where a separate hypervisor is used (see Fig. 2A and Fig. 2B).

The microkernel 141 supports the task module 148 with various components including the components described with Figs. 2A, 2B. In addition, the task module 148 includes a transfer agent 146 which is again configured for handling the transfer of data from guest systems VMs 150, 160 and the task module 148 to a processing area. The system comprises again VIRTIO devices 154, 164 that control the data transfer between the task module 148 and the first (or second) virtual machine 150 (or 160) and which are split in a frontend being part of the task module 148 and a backend being part of the virtual machines 150, 160. According to this embodiment the task module 148 is not virtualized.

It is understood that VIRTIO (or short VIO) defines a register/memory interface. The conventional method to use it was to expose it into a VM and let a device driver handle it. However, in microkernel systems the VIO register/memory interface can also be exposed into a task that does not run in a VM. A VIO device does not depend on its user being a VM. Therefore, according to embodiments, VIO may be used in a non-virtualized environment.

As in the previous embodiments, the trusted computing base in this embodiment includes the trusted module 140 (the task module 148 and the microkernel 141), the cryptographic hardware module 120 and the SMMUs 115, 135.

The microkernel 141 may be configured to support only a small trusted computing base by separating components of the trusted module 140 from each other and from the at least one virtual machine 150, 160, but no other components. The microkernel 141 may assign hardware recourses to non-privileged virtual machines, may allow communication between the separate virtual machines 150, 160 via tasks of the microkernel 141 compatible with device virtualization functionality and to prevent any bypass communication. The microkernel 141 may constrain the data flow by suppressing unauthorized data channels. With the help of the transfer agent 146, the property of the underlying (microkernel) channels is also preserved for the higher-level VIO devices, which are implemented on top of the underlying (microkernel) channels.

The microkernel 141 plays thus an important role in maintain a high security level.

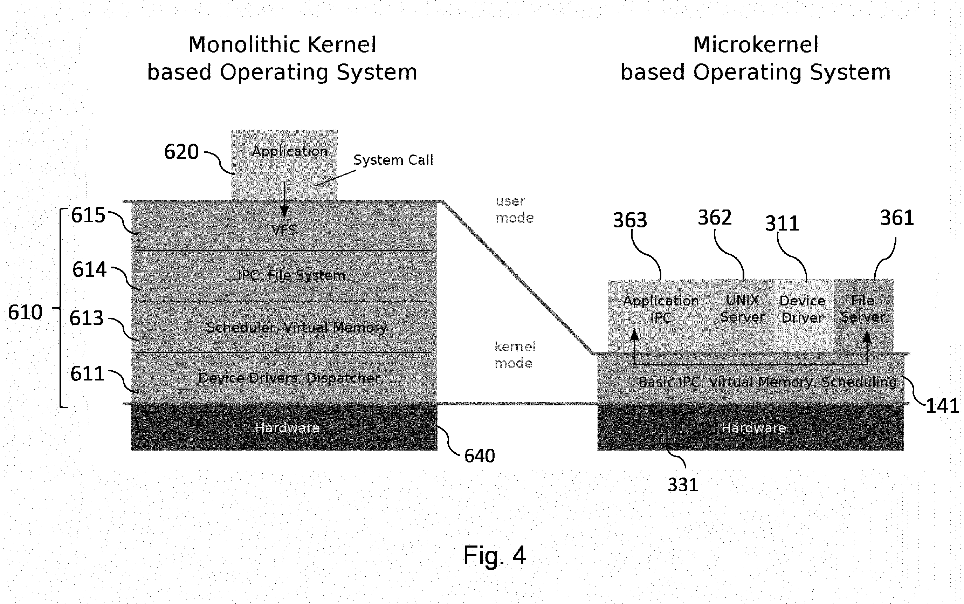

**Fig. 4** illustrates the differences of between a microkernel (e.g. the secure microkernel seL4) and an operating system based on a monolithic kernel. A microkernel which may be utilized in the trusted module 120 can be defined as a near-minimum amount of software that can provide mechanisms needed to implement an operating system (OS), wherein these mechanisms may include low-level address space management, thread management, and basic inter-process communication (IPC) including an access control.

A monolithic kernel-based operating system 610 as exemplary utilized in the virtual machines 150, 160 is shown of the left-hand side of Fig. 4 uses hardware components 640 and includes various components such as device drivers or dispatchers 611, a scheduler or a virtual memory 613, an inter-process communication (IPC), a file system 614 and a virtual file system (VFS) 615. This operating system 610 can block system calls of applications 620 running on top of the operating system 610.

When compared to the monolithic kernel-based operating system on the left-hand side, the microkernel-based operating systems 141 on the right-hand side of Fig. 4 may use hardware components 331 on which the operating system is running. However, the microkernel 141 includes only minimalistic components to enable applications such as the device driver 311, a file server 361, an exemplary UNIX server 362 and an application 363, which can use services provided by the server 362 by sending and receiving messages (IPC - interprocess communication).

According to embodiments, the microkernel 141 that defines a near-minimum amount of software that can provide a mechanism needed to implement an operating system is the secure microkernel seL4. A main characteristics of the secure microkernel seL4 is its formal proof or formal verification as set out in: G. Klein et al. seL4: Formal Verification of an OS Kernel IEEE Proceedings of the ACM SIGOPS 22nd Symposium on Operating Systems Principles, New York, NY, USA, 2009, pp. 207-220 (cp. http://doi.acm.org/10·1145/1629575.1629596). The formal proof means that this operating system kernel operates in an exactly deterministic way. Moreover, a secure microkernel employed in embodiments can be characterized as providing support of a component-based operating system using capability-based security.

A microkernel is a near-minimum amount of software that can provide the mechanisms needed to implement an operating system and Fig. 4 compares the microkernel-based operating system (right-hand side) with a monolithic kernel on the left-hand side. The main characteristics of the secured microkernel SEL 4 is its proof of correctness and the support of a component-based operating system using a capability-based security.

As mentioned before, according to embodiments, I/O devices that handle the data transmission between the separate components (e.g. between the trusted module 120 and the at least one virtual machine 150, 160) are virtualized based in part on the virtual I/O device (VIRTIO) standard. However, according to embodiments (see e.g. Figs. 2A,2B, Fig. 3), the VIRTIO 154, 164 is split in a guest VIRTIO subsystem 154a, 164a (VIO FRONTEND) and a host VIRTIO subsystem 154b, 164b (VIO BACKEND).

It is of particular advantage to implement the backend (or host subsystem) in the virtual machines 150, 160 (and not in the trusted module 120), whereas the frontend (or guest subsystem) of the VIRTIO 154, 164 are implemented in the trusted module 120. Therefore, the VIRTIO host or the VIO backend is not part of the TCB which includes the safety-critical components. The TCB includes the novel guest VIRTIO components, which in comparison to the backend is small and can be kept simple.

The known VIRTIO standard covers only the lowest layer of the frontend/guest, whereas drivers for the virtual device (see VIO NIC DRV in Figs 2A, 2B, 3) built thereon are guest specific (e.g. the operating system) and therefore are not standardized. On the host/backend side there is no standardization at all.

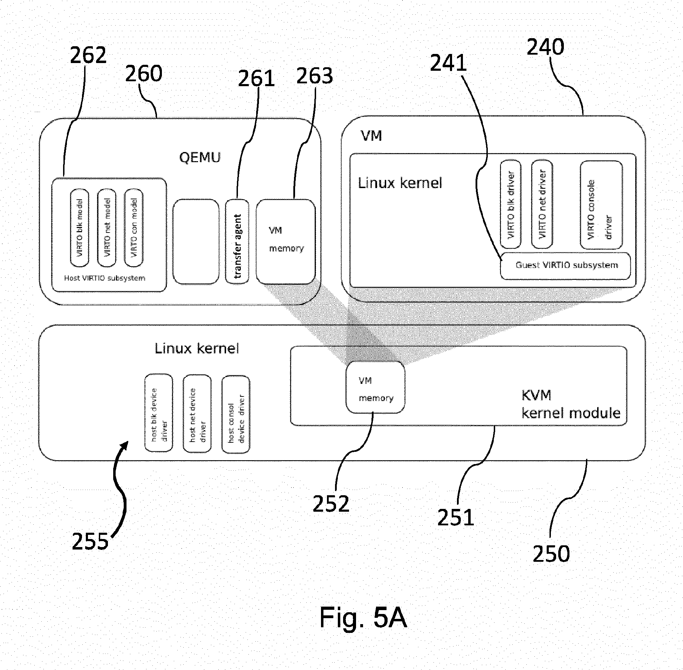

**Figs. 5A** to **5D** illustrate the strengths and limitations of a virtual input/output interface (VIRTIO) in conventional systems in comparison to embodiments.

The components here and in the following are defined as follows: A guest VIRTIO subsystem is a VIRTIO as it can be used by a VM. Only this interface is partly defined in the OASIS standard. A VIRTIO driver is a driver in a guest VM. The aim of the guest VIRTIO interface is to realize the simplest and most powerful VIRTIO driver (to use this property in embodiments in the safety-critical areas). A host VIRTIO subsystem/VIRTIO device model is an implementation of the VIRTIO functionality on a host side. A host device driver is a driver for the devices actually physically present in the system. Since the overall complexity of the host VIRTIO and host device driver may be significant, embodiments keep this complexity out of the safety-critical area. A transfer agent (VIRTIO orchestrator) is configured to handle the transfer of data from a guest system VMs to the processing area. The transfer agent may only execute a data transfer if it is approved by the guest as indicated by a guest VIRTIO buffer descriptor. Areas that are not designated as VIRTIO buffers by the guest will not be used as targets/sources for transfers by the transfer agent. Finally, the processing area is a memory region used by a host VIRTIO subsystem to fulfill its function. Data are transferred from a guest subsystem into this region and processed (e.g. written/read on/from a physical device). If needed, data are transferred from this region back to the guest subsystem (e.g. as consequence of a guest VIRTIO read operation)
The concrete system of **Fig. 5A** is based on a VIRTIO implementation of KVM (kernel-based virtual machine) in an exemplary Linux kernel and includes a Linux-Kernel 250 with a KVM kernel module 251 and a VM memory 252, a software 260 for machine emulator and virtualization such as QEMU, a guest system 240 being a virtual machine with Linux as guest system. A transfer agent (VIRTIO orchestrator) 261, a host VIRTIO subsystem/VIRTIO device model 262, and a VM memory 263 may be fully visible in the QEMU 260. The VM memories 263, 252 and the guest system 240 may be same objects, but may be only visible in different contexts. It is understood that a component (in particular when implemented in software) being "visible" or "exposed" to other components may refer to a component that can be accessed or addressed by the other components. The guest system 240 includes a guest VIRTIO subsystem 241 with multiple drivers.

The KVM VIRTIO architecture implicitly assumes that a host such as a Linux kernel 250 and the virtual machine monitor such as QEMU 260 are always trustworthy. The VIRTIO standard covers only the generic virtual input/output part of the guest side 240. For Linux, the host side implementation 250 and the guest virtual input/output device drivers 241 are readily available.

In this conventional implementation, the Linux kernel 240 and QEMU 260 have unlimited access to the VM memory 252 to allow for a high-performance implementation of a generic VIRTIO part. Furthermore, the entire memory of the guest is shown in the address space of QEMU. The transfer agent 261 then only copies within its address space. Although this construction is fast, it means that QEMU is in the TCB of the VM 240, which is accepted in the KVM implementation. However, for embodiments, a component of the complexity of QEMU inside the TCB is not acceptable for security reasons.

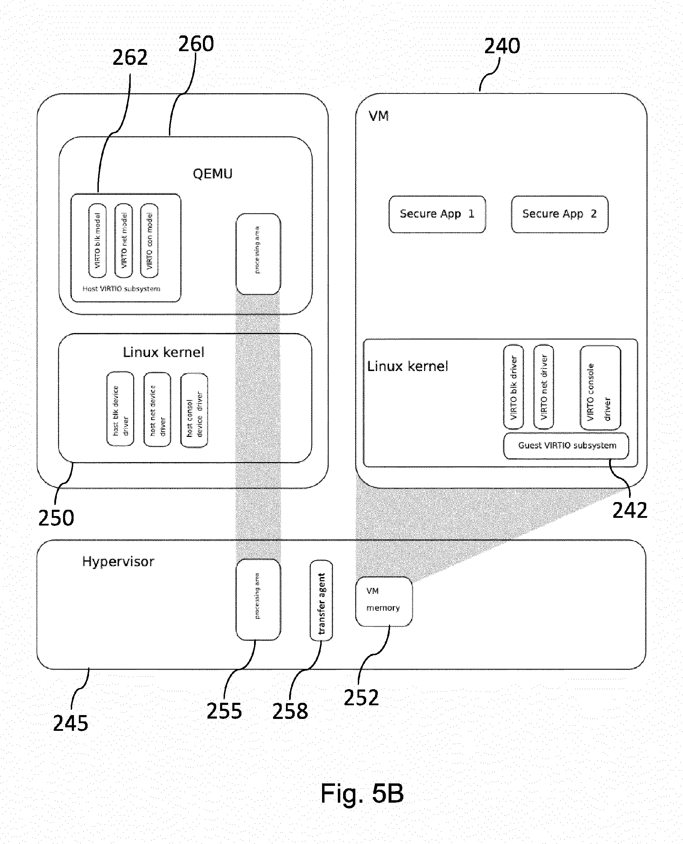

**Fig. 5B** illustrates an imaginary system to aid the understanding of the following systems. Here, the host system 250 itself runs in a VM on a hypervisor 245. The guest's memory 252 is no longer unlimited assessible in the VIRTIO host system: neither in QEMU (the VIRTIO backend 262) nor in the Linux Kernel 250 of the VIRTIO backend. Instead, the processing area 255 is directly visible in the hypervisor 245 and is exposed to the host VM 260 as a virtual device. This is itself a virtual device that the host VIRTIO VM is assigned to.

The transfer agent 258 is a component in the hypervisor 245 and is thus trustworthy. As consequence of this relocation, the size of the TCB of the guest 240 can be reduced significantly due to the removal/absence of the host VIRTIO VM.

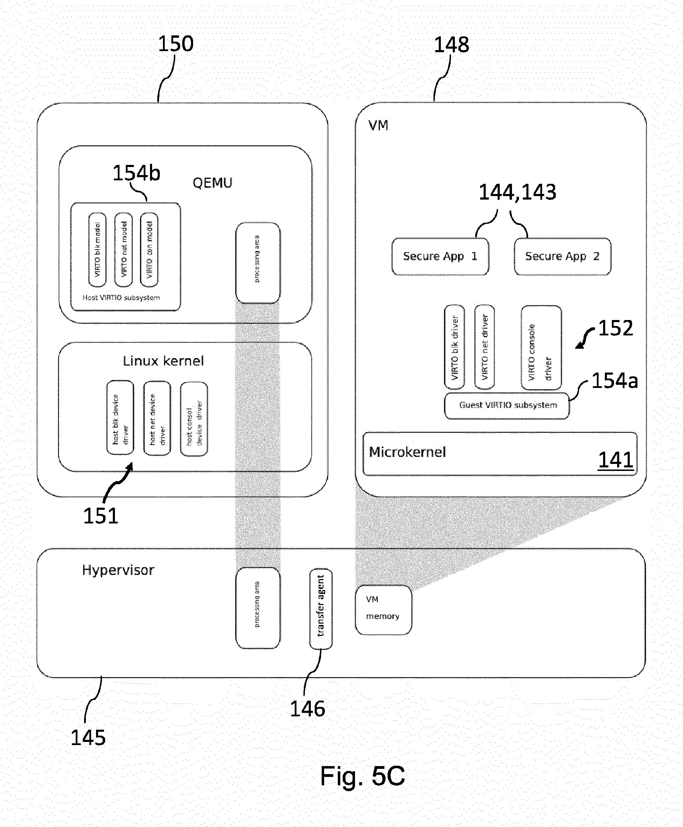

**Fig. 5C** illustrates the architecture for embodiments of Fig. 2A and 2B for the VM 150, the virtualized microkernel-based task module 148 and the separate hypervisor 145. The guest VIRTIO subsystem 154a is implemented in the virtualized task module 148 and the host VIRTIO subsystem 154b is implemented in the first virtual machine 150. In addition, security applications 143, 144 are implemented as task for the microkernel 141. Therefore, in contrast to the system of Fig. 5B, the guest VIRTIO infrastructure 154a is no longer implemented in the Linux kernel 242 (see Fig. 5B), but as the microkernel tasks 141. To keep this infrastructure as small as possible, a simple VIRTIO guest interface is used as an interface between the guest VIRTIO subsystem 154a and virtual device driver(s) 152, which may or may not reside in the same microkernel task. The guest VIO subsystem 154a provides the VIRTIO interface by exposing the VIO memory regions to the virtual device drivers 152. As these regions are managed by the transfer agent 146, the virtual device drivers 152 are connected to the VIRTIO host. The VIRTIO guest interface is in part defined in the OASIS standard.

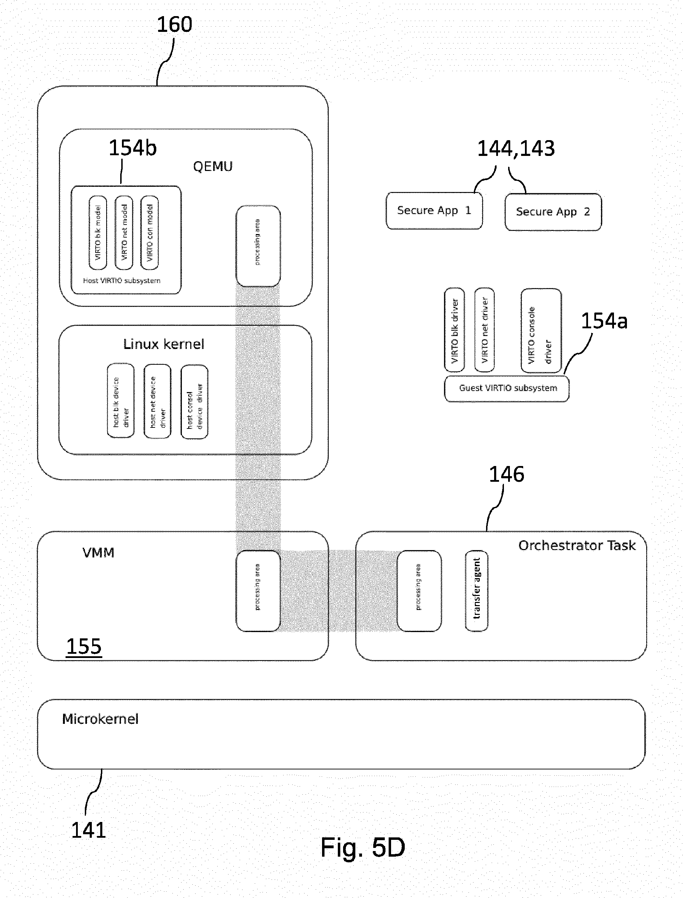

**Fig. 5D** illustrates the architecture for embodiment of Fig. 3, which is based on the microkernel 141 that provides the hypervisor function. The transfer agent 146 runs as a component within its own micro-kernel task (orchestrator task). Again, there is separation of the transfer agent 146 and the virtual machine monitor 155 implementing the connection to the first virtual machine 150 (see Fig. 3).

Therefore, embodiments use the low complexity for the VIRTIO interface and high-performance characteristics and reuse as much as possible of the existing non-standardized parts such as the device models, underlying implementations including host device drivers etc. Furthermore, the trust dependency may be broken on untrustworthy parts.

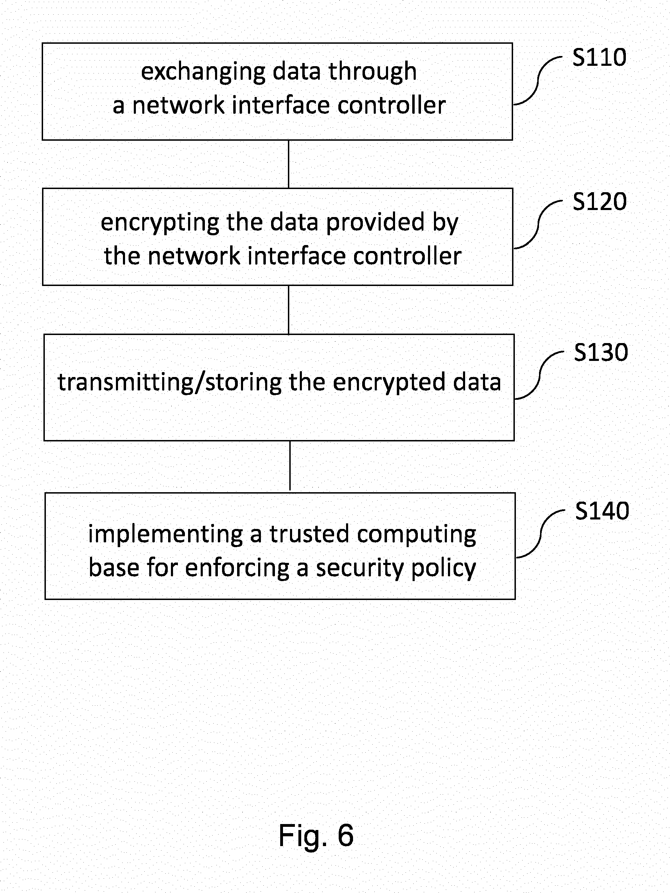

**Fig. 6** shows a schematic flow chart for a method for securely transmitting and/or storing of data. The method includes at least the steps of:
- exchanging S110 data through a NIC 110;
- encrypting S120, by a cryptographic hardware module 120, the data provided by the network interface controller 110 based on one or more cryptographic keys;
- transmitting S130, by a data transmission controller 130, the encrypted data; and
- implementing S140, by a trusted module 140 with a microkernel, a trusted computing base for enforcing a security policy, wherein the trusted module 140 and the cryptographic hardware module 120 allow access to the cryptographic hardware module 120 and the cryptographic keys only via the trusted module 140 to encrypt or to transmit the data in compliance with the security policy.

It is understood that in further embodiments some or all functions implemented by the systems as described before can be optional method steps in the method of Fig. 6. The order of method steps shall only be limited by the condition that one method step can only be carried our if another step is performed in advance.

This method may also be a computer-implemented method. A person of skill in the art would readily recognize that steps of the above-described method may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on a computer or processor.

It is further understood that embodiments can be employed for the application as described with Fig. 7A and Fig. 7B. Hence, further embodiments relate to a data recorder for a flying system as described with Fig. 7A and Fig. 7B, wherein the data handling when reading/storing the sensor data in the data recorder 440 is performed in accordance to embodiments as described before. Consequently, the attack scenarios illustrated in Figs. 8A to Fig. 8C can be prevented by embodiments.

Advantageous aspects of embodiments can be summarized as follows:
Embodiments define a hardware and software codesign that ensures a seamless integration of a secured partition (including the trusted module 140) into an existing storage system. In particular, only a dedicated software partition (the trusted module 140) can directly access the cryptographic hardware accelerators 120 and cryptographic key materials to provide a strictly isolated cryptographic software component. This may be achieved by inserting a security virtual machine. Therefore, the desired separation of the software components may be achieved by a dedicated partition to separate trusted and untrusted components.

In addition, a secure data flow is ensured by providing a secured, non-bypassable communication channel between the software components. The secure channel may be implemented such that it conforms to the VIO interface specification. Furthermore, embodiments allow to use existing software infrastructures, while the security-property confidentiality is preserved.

Embodiment achieve the following system properties/design goals:
- The performance is comparable with a solution based on a monolithic kernel.
- The development and maintenance costs are low.
- A high-level confidentiality under the assumed threat model is maintained.

The high performance is achieved by re-using existing platform BSP (in the virtual machines 150, 160), even if not trustworthy. The low development costs are possible because existing platform BSP are re-used, again even if not trustworthy. The confidentiality is ensured by isolation of the components and by a control of the data flow. In addition, the confidentiality is kept by minimizing the TCB of trusted components.

The hypervisor 145 used in embodiments has the following properties:
- to keep the TCB of the virtualization system small, the hypervisor should have a small size;
- the hypervisor shall not grant to a VM the ability to change system privileges, as e.g. memory configuration, memory access, device access, communication rights (as would be possible for a "privileged VM"), the system configuration is part of the hypervisor configuration and is defined by the system integrator, it cannot be changed at runtime;
- is able to assign hardware resources to non-privileged VMs and constrains DMA with an IO-memory management unit, IOMMU (also designed as SMMU in some systems), to prevent unauthorized data access by untrusted device drivers;
- enables a high-performance (high throughput, low latency) inter-VM communication compatible with device virtualization functionality such as VIRTIO (e.g. by at least one of the following: request identification, bulk data transfer, signal generation);
- is able to constrain the data flow (e.g. an effective suppression of unauthorized data channels and a mutually distrustful communication peers; the communication must not assume that one peer has full control (including the ability to access arbitrary memory regions) over its counterpart as it is the case for some existing VIO implementations).

Conventional hypervisors generally do not fulfill these properties and are thus not suitable, because:
- they are part of a large TCB due to the inclusion of Linux (KVM, Xen);
- have only a limited or no support for device drivers in untrusted VMs (KVM, Xen);
- they are not suitable for inter-VM transport mechanism that are: no mature support for VIRTIO (Xen), insufficient VIRTIO performance (seL4 VMM), and asymmetric trust relationship between VMs (one VM has control over its peer) (KVM).

In comparison to the conventional systems, embodiments achieve advantages because:
(A) The hypervisor 145 is combined with strongly separated VMs 150, 160, i.e., two untrusted VMs (running e.g. Linux) and a trusted one (the trusted module 140 running e.g. a microkernel-based secure environment).
(B) Various devices can be assigned to different VMs: NIC device 110 and DISK device 130 are assigned to (untrusted, e.g. Linux) VM 150, 160; unmodified device drivers for NIC and DISK (the first drive 151, the second driver 161) are re-used in an isolated environment (exemplary Linux VMs 150,160), CRYPTO device 120 is placed under control of trusted VM or microkernel 141 (trusted module 140), the DMA traffic is controlled from untrusted operations with SMMUs 115, 135, which is also controlled by trusted VM (trusted module 140).
(C) Functionalities are made available to secure gateway application 144 by way of VIRTIO functionality. In particular, the data flow may be forced through the secure gateway 144.
(D) By placing the security-critical functionalities in a trustworthy VM (the trusted module 140), it is ensured that these functionalities cannot be interfered with. The threat Scenarios A, B, and C as outlined before with Figs. 8A to 8C are mitigated.
(E) A secure inter-VM communication channel is provided: The communication can only take place along authorized channels (based on the VIRTIO devices 154, 164 as described before). The design of the channels is such that communication partners can be mutually distrustful (it is noted that this is not true for the KVM implementations). The channel infrastructure (VIO frontend, VIO backend, drivers for virtual devices) may be available in existing systems.
(F) This can be done by re-using an existing scheme such as VIRTIO.
(G) VIRTIO mechanism is redesigned so that the VIRTIO backend (host subsystem) has no unlimited access to the VIRTIO frontend (client, guest subsystem).
(H) The roles may also be switched (the exemplary Linux VMs 150, 160 become VIRTIO clients and the secure gateway 144 assumes the role of VIRTIO backend). However, this constellation needs additional helper components and incurs higher performance overhead (additional components in the trusted module 140 are undesirable from a security/complexity/development point of view). This secure communication will ensure that the threat scenario of Fig. 8B as outlined before is mitigated.

Finally, it should be stressed that embodiments allow a seamless integration by using of standardized interfaces for inter-VM communication in combination with a free choice of software configuration in the individual VMs 150, 160.

The software costs can be reduced significantly by reusing existing (e.g. Linux) drivers without security issues attendant on Linux. There is no need for expensive driver development outside of the exemplary Linux ecosystem as far as standard devices (non-crypto) are concerned. Nevertheless, a high assurance with regard to confidentiality properties is achieved owing to a small TCB of crypto module 120.

The software can be developed simultaneously, especially the development cycle for individual drivers can be decoupled. There is no interdependency between crypto drivers 120 and other device drivers 151, 161 (allowing for easy crypto change).

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

It is therefore clear that there is a plurality of possible variations. It is also clear that embodiments stated by way of example are only really examples that are not to be seen as limiting the scope, application possibilities or configuration of the invention in any way. In fact, the preceding description and the description of the figures enable the person skilled in the art to implement the exemplary embodiments in concrete manner, wherein, with the knowledge of the disclosed inventive concept, the person skilled in the art is able to undertake various changes, for example, with regard to the functioning or arrangement of individual elements stated in an exemplary embodiment without leaving the scope of the invention, which is defined by the claims and their legal equivalents, such as further explanations in the description.

### LIST OF REFERENCE SIGNS

- 110,430,445,482,710: network interface controller
- 115,135,711,741: system memory management units (SMMU); IO memory management unit (IOMMU)
- 120,446,720: cryptographic hardware module
- 130,447,740: data transmission/disk controller
- 140: trusted module
- 141: microkernel
- 142,442: cryptographic driver
- 143,449: authenticator
- 144,750: secured gateway application
- 145: hypervisor unit
- 146,258: transfer agent, virtual Input/Output device (VIRTIO) orchestrator
- 148: microkernel-based virtual machine, task module
- 150, 160,240: virtual machine(s)
- 151,161,441,443,715,725,735: driver(s)
- 152: virtual device driver(s)
- 155, 165: virtual machine monitor(s)
- 154,164: VIRTIO
- 154a, 164a,242: frontend subsystem (e.g. guest)
- 154b,164b,262: backend subsystem (e.g. host)
- 260, 261, 261: QEMU and its components
- 250,610,611...760: Linux kernel
- 251: KVM kernel module
- 252: VM memory
- 255,448: processing area
- 311,640: hardware
- 331,311,361,362,363: microkernel tasks
- 410,420: sensor node, sensors
- 440: data recorder
- 450: storage device
- 510,520: attacker, agent
- 620: monolithic kernel applications

## Claims

1. A system for securely transmitting or storing data, the system comprising:
a network interface controller, NIC, (110) providing an interface for exchanging data;
a cryptographic hardware module (120), configured to encrypt or decrypt data provided by the network interface controller (110) based on one or more cryptographic keys;
a data transmission controller (130), configured to transmit the encrypted data; and
a trusted module (140) with a microkernel (141), configured to implement a trusted computing base, TCB, for enforcing a security policy,
wherein the trusted module (140) is configured to allow access to the cryptographic hardware module (120) and the cryptographic keys only via the trusted module (140) to thus encrypt or transmit the data in compliance with the security policy.

2. The system according to claim 1, wherein the trusted module (140) is configured to control all data transmissions between the network interface controller (110) and data transmission controller (130) and to prevent, according to the security policy, all communications bypassing the trusted module (140).

3. The system according to claim 1 or claim 2, wherein the trusted module (140) includes a cryptographic driver (142) as part of the trusted computing base, wherein, according to the security policy, only components of the trusted module (140) are able to access the cryptographic hardware module (120).

4. The system according to one of the preceding claims, wherein the data transmission controller (130) is:
another network interface controller, NIC, configured to enable an encrypted data communication with the NIC (110) and the other NIC (130) as communication input/output devices; or
a data storage controller configured to store the encrypted data or to read encrypted data to/from a storage device.

5. The system according to one of the preceding claims, further comprising:
at least one separate virtual machine (150, 160) based on a monolithic or a hybrid kernel providing a first driver (151) for the network interface controller (110) and a second driver (161) for the data transmission controller (130);
a first system memory management unit, SMMU, (115) for managing data transmissions through the NIC (110) controlled by the first driver (151); and
a second system memory management unit, SMMU, (135) for managing data transmission to and from the data transmission controller (130) controlled by the second driver (161),
wherein the trusted module (140) is separated from the at least one separate virtual machine (150, 160) and is configured to control each SMMU (115, 135) as part of the trusted computing base by controlling direct memory access, DMA, from untrusted computing components.

6. The system according to claim 5, wherein the trusted module (140) includes a microkernel-based virtual machine (148) and the system further comprising:
a hypervisor unit (145) with at least one transfer agent (146) for performing a data transfer to/from the at least one separate virtual machine (150, 160) and the microkernel-based virtual machine (148), the hypervisor (145) being configured to manage the microkernel-based virtual machine (148) and the at least one separate virtual machine (150, 160).

7. The system according to claim 5, wherein the trusted module (140) is split into a task module (148) and the microkernel (141) and the system comprises further at least one virtual machine monitor (155, 165),
the microkernel (141) being further configured to provide a hypervisor (145), wherein the task module (148) includes at least one transfer agent (146), configured to perform together with at least one virtual machine monitor (155, 165) the data transfer to and from the at least one separate virtual machine (150, 160).

8. The system according to claim 6 or claim 7, wherein the microkernel (141) is configured to provide at least one of the following:
- to support only a small trusted computing base by separating only components of the trusted module (140) from each other and from the at least one virtual machine (150, 160), but no other components,
- to assign hardware ressources to non-privileged virtual machines,
- to allow communication between the separate virtual machines (150, 160) via tasks of the microkernel (141) compatible with device virtualization functionality,
- to constrain data flow by suppressing unauthorized data channels or by suppressing communications based on an assumption that one peer has control over another peer,
- to limit or to reject access of device drivers in untrusted virtual machines.

9. The system according to one of claims 5 to 8, further including at least one virtual Input/Output device, VIRTIO, (154, 164) with a respective frontend subsystem (154a, 164a) and a backend subsystem (154b, 164b),
the at least one virtual machine (150, 160) including the backend subsystem (154b, 164b) as a host and the trusted module (140) including frontend subsystem (154a, 164a) as a guest.

10. The system according to one of the preceding claims, wherein the trusted module (140) further includes at least one of the following:
- an authenticator (143) for authentication of data or access of data,
- a secured gateway application (144),
- a driver for a virtual network interface controller (VIO NIC DRV),
- a driver for a virtual disk controller (VIO DISK DRV)

11. A method for securely storing of data, the method comprising:
exchanging (S110) data through a network interface controller, NIC, (110);
encrypting (S120), by a cryptographic hardware module (120), the data provided by the network interface controller (110) based on one or more cryptographic keys;
transmitting (S130), by a data transmission controller (130), the encrypted data; and
implementing (S140), by a trusted module (140) with a microkernel, a trusted computing base, TCB, for enforcing a security policy, wherein the trusted module (140) and the cryptographic hardware module (120) allow access to the cryptographic hardware module (120) and the cryptographic keys only via the trusted module (140) to encrypt or to transmit the data in compliance with the security policy.

12. A computer program product comprising program code for carrying out the method according to claim 11 when the program code is executed on a processing unit.
